# EUROPEAN PATENT APPLICATION

(11) **EP 4 512 653 A1**
(43) Date of publication of application: **26.02.2025**
(21) Application number: 24195343.9
(22) Date of filing: 20.08.2024
(51) Int. Cl.: B60L 53/53, B60L 53/10

(54) **CHARGING STATION FOR CHARGING ELECTRIC VEHICLES**

(30) Priority: 21.08.2023 IT 202300017424
(71) Applicant: EnerSys Delaware Inc., Reading, PA 19605 (US)
(72) Inventor: DEHEM, Patrick, Reading, 19605 (US); LETOMBE, David, Reading, 19605 (US); SIMON, Guillaume, Reading, 19605 (US); PIETRANTOZZI, Enrico, Reading, 19605 (US); KECHMIR, Mohammed, Reading, 19605 (US)
(74) Representative: Abel & Imray LLP

(57) **Abstract**

A charging station for charging electric vehicles. The charging station comprises a direct current, DC, bus arranged to receive power from one or more external energy sources. The charging station also comprises a battery coupled to the DC bus, the battery being arranged to charge via power received from the one or more external energy sources via the DC bus. The charging station also comprises one or more DC/DC converters coupled to the DC bus. The one or more DC/DC converters are arranged to draw DC power from the battery, via the DC bus, and output DC power to one or more electric vehicles via one or more charging connections, to charge the one or more electric vehicles.

## Description

### Technical Field

The present disclosure relates to charging stations for charging electric vehicles. The present disclosure also relates to methods of controlling charging stations for charging electric vehicles, and circuitry for electric vehicle charging stations.

### Background

Charging stations may be used to charge electric vehicles, e.g. battery-powered vehicles. Examples of such electric vehicles include electrically powered cars, buses, trucks, scooters, bicycles, aircraft, etc. A single charging station may be able to charge multiple electric vehicles simultaneously, e.g. by using multiple charging points or connections, each connectable to a respective electric vehicle. A typical charging station is connected to, and receives power from, an external energy source, such as an electrical power grid or a renewable energy source. When an electric vehicle is brought to the charging station, the charging station can draw power from the external energy source and output power to the electric vehicle to charge the electric vehicle. For example, a battery pack on board the electric vehicle may be charged. The connection between the charging station and the electric vehicle, enabling charging of the electric vehicle, may be a wired connection or a wireless connection.

Such charging stations may have a relatively high power consumption and spikes in demand may occur, e.g. when multiple electric vehicles are being charged simultaneously. This can negatively impact the external energy source (e.g. the electrical grid) that is providing power to the charging station. To try to avoid such issues, the charging station may reduce the output power used to charge the electric vehicles. However, this increases the charge time and is therefore undesirable. Moreover, if a loss in received power from the external energy source occurs (e.g. due to a power outage or loss of supply of an electrical grid, or due to the intermittent nature of some renewable energy sources), the charging station may be unable to provide power for charging electric vehicles.

The present disclosure seeks to address the above-mentioned problems. Alternatively or additionally, the present disclosure seeks to provide improved charging stations for charging electric vehicles.

### Summary

According to a first aspect, there is provided a charging station for charging electric vehicles, the charging station comprising: a direct current, DC, bus arranged to receive power from one or more external energy sources; a battery coupled to the DC bus, the battery being arranged to charge via power received from the one or more external energy sources via the DC bus; and one or more DC/DC converters coupled to the DC bus, the one or more DC/DC converters being arranged to: draw DC power from the battery, via the DC bus; and output DC power to one or more electric vehicles via one or more charging connections, to charge the one or more electric vehicles.

According to a second aspect, there is provided a method of controlling a charging station for charging electric vehicles, the charging station comprising: a direct current, DC, bus arranged to receive power from one or more external energy sources; a battery coupled to the DC bus; and one or more DC/DC converters coupled to the DC bus, the method comprising: causing the battery to charge via power received from the one or more external energy sources via the DC bus; and causing the one or more DC/DC converters to: draw DC power from the battery, via the DC bus; and output DC power to one or more electric vehicles via one or more charging connections, to charge the one or more electric vehicles.

According to a third aspect, there is provided circuitry for an electric vehicle charging station, the electrical circuitry comprising: a direct current, DC, bus arranged to receive power from one or more external energy sources; and one or more DC/DC converters coupled to the DC bus, the one or more DC/DC converters being arranged to: draw DC power from a battery, via the DC bus, the battery being arranged to charge via power received from the one or more external energy sources via the DC bus; and output DC power to one or more electric vehicles via one or more charging connections, to charge the one or more electric vehicles.

It should be appreciated that features described in relation to one aspect of the present disclosure may be incorporated into other aspects of the present disclosure. For example, a method aspect may incorporate any of the features described with reference to an apparatus aspect and *vice versa.*

### Description of the Drawings

Embodiments of the present disclosure will now be described by way of example only with reference to the accompanying schematic drawings of which:
Figure 1 shows a functional block diagram of a charging station according to embodiments of the present disclosure;
Figure 2 shows a functional block diagram of a charging station according to embodiments of the present disclosure;
Figure 3 shows a functional block diagram of a charging station according to embodiments of the present disclosure;
Figure 4 shows a schematic network diagram of a charging station according to embodiments of the present disclosure;
Figures 5a-5c show schematic diagrams of front-end electric vehicle chargers according to embodiments of the present disclosure; and
Figure 6 shows a flow diagram depicting a method of controlling a charging station, according to embodiments of the present disclosure.

### Detailed Description

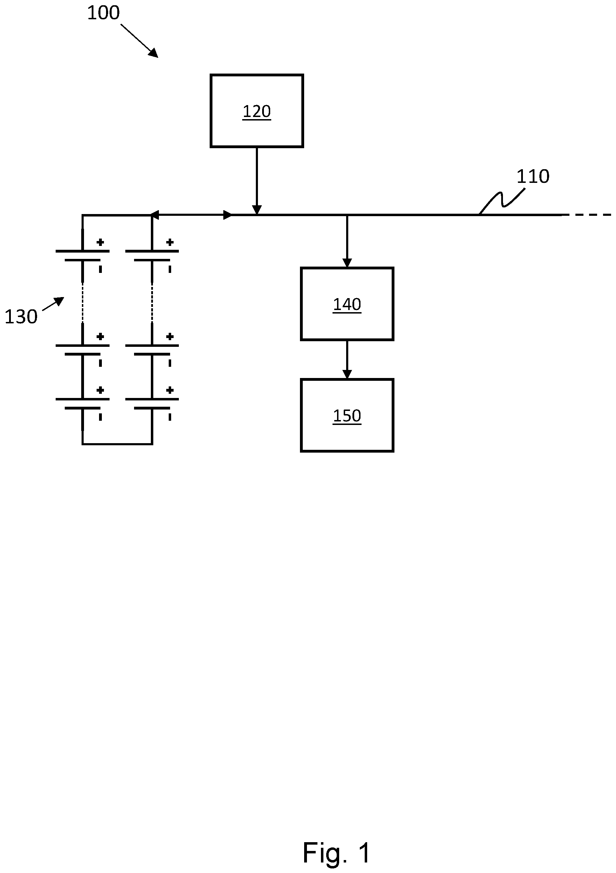

Figure 1 shows a functional block diagram of a charging station 100 according to embodiments of the present disclosure. The charging station 100 may be used to charge one or more electric vehicles (not shown).

The charging station 100 comprises a DC bus 110. The DC bus 110 is arranged to receive power from an external energy source 120. The external energy source 120 is external to the charging station 100. Examples of external energy sources are described in more detail below, but may include an electrical grid and/or one or more renewable energy sources. In embodiments, the DC bus 110 is arranged to receive power from a plurality of external energy sources.

The charging station 100 comprises a battery 130. The battery 130 is coupled to the DC bus 110. The battery 130 is arranged to charge via power received from the external energy source 120 via the DC bus 110.

In embodiments, the battery 130 is a modular battery. In such embodiments, the battery 130 comprises a plurality of removable strings connected to each other in parallel. Each string comprises one or more cells. Each cell may comprise a lithium cell, for example. The voltage and/or power capacity of the battery 130 may be adjusted by adding or removing strings of cells. In embodiments, the voltage of the battery 130 defines a voltage value for the DC bus 110, and is dependent on a charge state of the battery 130 (thereby defining a voltage range of the battery 130). In embodiments, the charging station 100 comprises a plurality of battery management systems (not shown). Each battery management system is configured to manage a respective string of the plurality of strings of the battery 130. This allows one or more of the strings of the battery 130 to be removed without negatively impacting the functionality of the battery 130 and/or battery management. In alternative embodiments, the battery 130 is not modular. For example, the battery 130 may comprise only a single string of cells and/or only a single cell. In alternative embodiments, the charging station 100 comprises a single battery management system or comprises no battery management system.

The charging station 100 comprises a DC/DC converter 140. The DC/DC converter 140 is coupled to the DC bus 110. The DC/DC converter 140 is arranged to draw DC power from the battery 130, via the DC bus 110. The DC/DC converter 140 is arranged to output DC power to an electric vehicle (not shown) via a charging connection 150, to charge the electric vehicle. In embodiments, the charging connection 150 comprises or is comprised in a front-end electric vehicle charger, as will be described in more detail below. The charging connection 150 may comprise a wired or a wireless connection for connecting to the electric vehicle. In embodiments, the charging connection 150 comprises a DC charging connection 150. A DC charging connection may be able to charge an electric vehicle more quickly than an AC charging connection. Although the charging connection 150 is shown in Figure 1 as being part of the charging station 100, it will be understood that the charging connection 150 may be separate from the charging station 100 in some embodiments. That is, the charging station 100 may be arranged to output power to the charging connection 150. The DC/DC converter 140 is used to manage the power flow between the DC bus 110 and the charging connection 150. The DC/DC converter 140 is configured to handle the voltage range of the battery 130 and the voltage range of electrical vehicles that may be charged. In embodiments, the charging station 100 comprises a plurality of DC/DC converters 140 coupled to the DC bus 110, as will be described in more detail below.

As such, the charging station 100 is able to store energy received from the external energy source 120, through use of the battery 130, and provide energy from the battery 130 to charge electric vehicles. The charging station 100 may be referred to as a "battery-buffered charging station", because the battery 130 is used as a buffer between the external energy source 120 and the charging connection 150. In embodiments, the DC bus 110, battery 130 and DC/DC converter 140 together form an energy link between the external energy source 120 and the charging connection 150.

By using the battery 130 as a buffer in the charging station 100, the power demand of the charging station 100 may be reduced. In particular, the charging station 100 can handle possible spikes in demand without negatively impacting the external energy source 120. This allows the charging station 100 to increase its output power without impacting the external energy source 120 (e.g. an electrical grid). For example, the charging station 100 can implement multiple high-power chargers (e.g. rapid chargers) without the negative effects that would otherwise occur due to spikes in demand. Charge times can thus be decreased.

Further, the use of the battery 130 allows the charging station 100 to continue to be able to provide power for charging electrical vehicles even when there is a temporary loss in received power from the external energy source 120, e.g. due to a power outage. This improves the reliability of the charging station 100. Where the external energy source 120 comprises a renewable energy source that provides power only intermittently (e.g. a solar or wind energy source), the charging station 100 is able to store energy from such sources using the battery 130, thereby allowing electric vehicles to be charged regardless of whether or not the renewable energy source is currently providing power to the charging station 100. Additionally, the energy stored in the battery 130 may be used to power the charging station 100 itself (e.g. one or more auxiliary functions of the charging station, such as visual displays, cameras, etc.), thereby improving the utility of the charging station 100 and reducing demand on the external energy source 120.

In embodiments, the charging station 100 is arranged to provide DC charging for electric vehicles. DC charging may be faster than AC charging. Whereas AC charging supplies AC power to the electric vehicle, which must then convert AC power to DC power before entering the on-board battery of the vehicle, DC charging can provide DC power directly to the on-board battery. The charging station 100 is arranged to provide DC charging through use of the DC bus 110, the battery 130 and the DC/DC converter 140, for example.

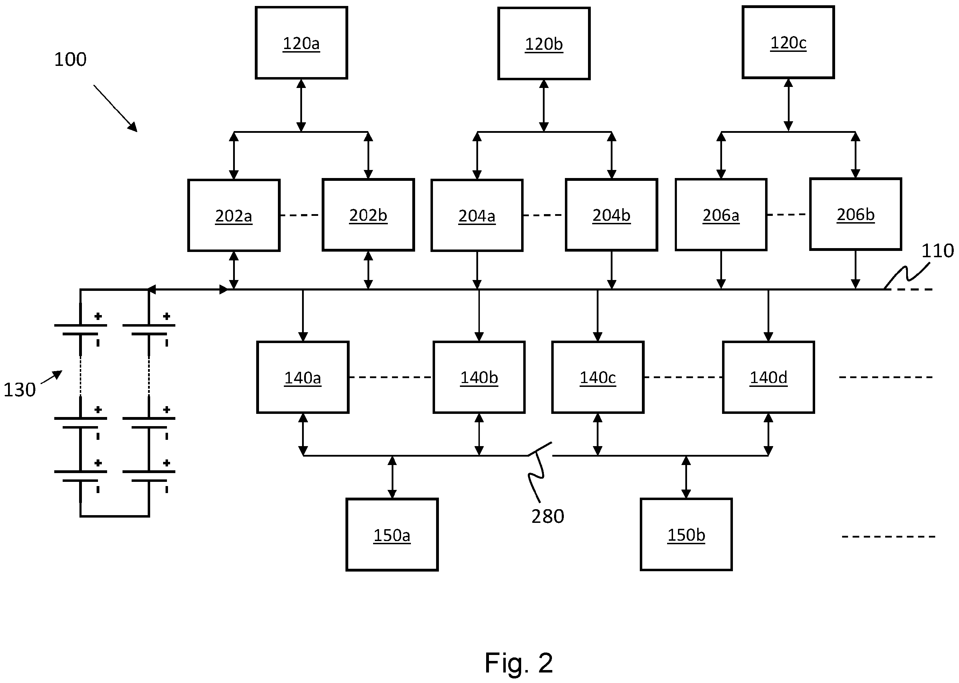

Figure 2 shows a functional block diagram of the charging station 100 in more detail, according to embodiments of the present disclosure.

In the embodiments of Figure 2, the charging station 100 comprises a plurality of DC/DC converters 140a-140d. The plurality of DC/DC converters 140a-140d are connected, in parallel, to the DC bus 110. Although four DC/DC converters are shown in Figure 2, it will be understood that the plurality of DC/DC converters 140a-140d may comprise any number of DC/DC converters. In embodiments, each of the plurality of DC/DC converters 140a-140d is a removable DC/DC converter. That is, each of the DC/DC converters 140a-140d may be disconnected from the DC bus 110 and/or removed from the charging station 100. The DC/DC converters 140a-140d may be individually removable or may be removable in one or more groups.

In embodiments, the DC bus 100 comprises connectors (not shown) for connecting one or more additional DC/DC converters (not shown) to the DC bus 110. The one or more additional DC/DC converters may be connected in parallel with the one or more DC/DC converters 140a-140d that are coupled to the DC bus 110. As such, the charging capabilities of the charging station 100 may be adjusted, by removing DC/DC converters from the DC bus 110 and/or connecting additional DC/DC converters to the DC bus 110. This improves the flexibility and modularity of the charging station 100.

In embodiments, the plurality of DC/DC converters 140a-140d are operable to output DC power to a first common charging connection 150a for charging an electric vehicle (not shown). In embodiments, the charging station 100 comprises a switch 280 arranged to selectively connect one or more of the plurality of DC/DC converters 140a-140d to the common charging connection 150a. In embodiments, the plurality of DC/DC converters 140a-140d are also operable to output DC power to a second common charging connection 150b. The switch 280 is arranged to selectively connect one or more of the plurality of DC/DC converters 140a-140d to the second common charging connection 150b. In the embodiments shown in Figure 2, the plurality of DC/DC converters 140a-140d comprises a first group of DC/DC converters 140a, 140b and a second group of DC/DC converters 140c, 140d. When the switch 280 is open, the first group of DC/DC converters 140a, 140b is arranged to output power to the first common charging connection 150a, and the second group of DC/DC converters 140c, 140d is arranged to output power to the second common charging connection 150b. When the switch is closed, both groups of DC/DC converters 140a-140d are arranged to output power to both charging connections 150a, 150b. This allows the charging capabilities of the charging station 100 to be adjusted, thereby providing the charging station 100 with increased flexibility and an ability to dynamically adapt to changing demands, e.g. in relation to the number and/or types of electrical vehicles that may be charged simultaneously. In alternative embodiments, the charging station 100 comprises or outputs power to only a single charging connection, e.g. the first charging connection 150a.

In the embodiments of Figure 2, the DC bus 110 is arranged to receive power from an electrical grid 120a, e.g. a power grid. The electrical grid 120a is an example of an external energy source 120. In such embodiments, the charging station 100 comprises one or more AC/DC converters 202a, 202b coupled to the DC bus 110. The one or more AC/DC converters 202a, 202b are arranged to receive an alternating current, AC, input from the electrical grid 120a, and to output DC power to the DC bus 110. That is, the AC/DC converters 202a, 202b provide a link between the electrical grid 120a and the DC bus 110. In embodiments, the one or more AC/DC converters 202a, 202b comprise a plurality of AC/DC converters connected in parallel to the DC bus 110. The one or more AC/DC converters 202a, 202b may be removable from the DC bus 110, and/or the DC bus 110 may comprise connectors to allow additional AC/DC converters to be connected to the DC bus 110.

In embodiments, the charging station 100 is arranged to output power from the battery 130 to the electrical grid 120a, via the DC bus 110. This is shown with double-pointed arrows in Figure 2. As such, the charging station 100 can provide power to the electrical grid 120a as well as receive power from the electrical grid 120a, in some embodiments. This allows the overall power consumption of the charging station 100 to be reduced, and/or ensures that the electrical grid is not overcharged. In alternative embodiments, the charging station 100 is not connected to an electrical grid.

In embodiments, the DC bus 110 is arranged to receive power from a renewable energy source 120b, 120c. The DC bus 110 may be arranged to receive power from the renewable energy source 120b, 120c in addition to, or instead of, receiving power from the electrical grid 120a. In embodiments, the charging station 100 comprises one or more power converters 204a, 204b, 206a, 206b coupled to the DC bus 110. The one or more power converters 204a, 204b, 206a, 206b may comprise one or more AC/DC converters and/or one or more DC/DC converters, for example. The one or more power converters 204a, 204b, 206a, 206b are arranged to receive power from the renewable energy source 120b, 120c, and output DC power to the DC bus 110. That is, the power converters 204a, 204b, 206a, 206b provide a link between the renewable energy source 120b, 120c and the DC bus 110.

In the embodiments shown in Figure 2, the DC bus 110 is arranged to receive power from a plurality of renewable energy sources, including a wind energy source 120b and a solar energy source 120c. The renewable energy sources 120b, 120c are examples of external energy sources. Other types of renewable energy source may be used in alternative embodiments.

In the embodiments of Figure 2, the charging station 100 comprises one or more AC/DC converters 204a, 204b coupled to the DC bus 110 and arranged to receive an AC input from the wind energy source 120b and output DC power to the DC bus 110. The AC/DC converters 204a, 204b may be used to provide power to the battery 130 with optimal power flow control. Multiple AC/DC converters 204a, 204b may be connected in parallel to manage received power from the wind energy source 120b. The output range of the AC/DC converters 204a, 204b is compatible with the voltage range of the battery 130.

In embodiments, the charging station 100 comprises one or more DC/DC converters 206a, 206b coupled to the DC bus 110 and arranged to receive a DC input from the solar energy source 120c and output DC power to the DC bus 110. In embodiments, the DC/DC converters 206a, 206b are configured to control a maximum power point tracking, MPPT, for the solar energy source 120c. This optimizes the power flow to the DC bus 110. The output range of the DC/DC converters 206a, 206b is compatible with the voltage range of the battery 130. Multiple DC/DC converters 206a, 206b may be connected in parallel to manage received power from the solar energy source 120c.

It will be understood that the charging station 100 may have more, fewer and/or different components in other embodiments. For example, one or more of the DC/DC converters 140a-140d, one or more of the charging connections 150a, 150b, the switch 280, one or more of the power converters 202a, 202b, 204a, 204b, 206a, 206b, and/or one or more of the external energy sources 120a-120c may be omitted in some embodiments.

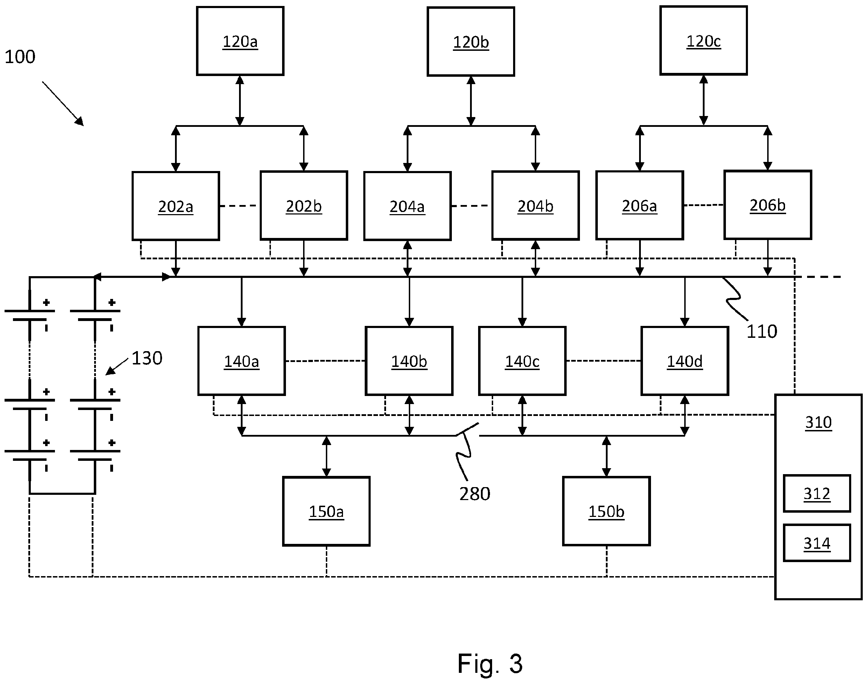

Figure 3 shows a functional block diagram of the charging station 100 according to embodiments of the present disclosure.

In the embodiments of Figure 3, the charging station 100 comprises a controller 310. The controller 310 may comprise one or more components. The one or more components may be implemented in hardware and/or software. The one or more components may be co-located or may be located remotely from each other. In some embodiments, the controller 310 is located remotely from the charging station 100. The controller 310 may be embodied as one or more software functions and/or hardware modules. In embodiments, the controller 310 comprises one or more processors 312 configured to process instructions and/or data. Operations performed by the one or more processors 312 may be carried out by hardware and/or software. In embodiments, the controller 310 comprises at least one memory 314. The at least one memory 314 may comprise at least one volatile memory, at least one non-volatile memory, and/or at least one data storage unit. The volatile memory, non-volatile memory and/or data storage unit may be configured to store computer-readable information and/or instructions for use by one or more processors 312.

The controller 310 is communicatively coupled to one or more components of the charging station 100. For example, the controller 310 may be communicatively coupled to one or more of the battery 130, the DC/DC converters 140a-140d, the power converters 202a, 202b, 204a, 204b, 206a, 206b, and the charging connections 150a, 150b. In embodiments, the controller 310 is configured to receive information from one or more of the components to which it is communicatively coupled. For example, the controller 310 may receive information indicating a status, power, current, voltage and/or temperature associated with such components, e.g. the battery 130 or the DC/DC converters 140a-140d. In embodiments, the controller 310 is configured to output control signals to control one or more of the components to which it is communicatively coupled.

The controller 310 is configured to control charging and discharging of the battery 130. The controller 310 is configured to control charging of the battery 130 by controlling the power received at the battery 130 from the one or more external energy sources 120a-120c via the DC bus 110. For example, the controller 310 may control the DC output of one or more power converters 202a, 202b, 204a, 204b, 206a, 206b that are coupled to the DC bus 110 and arranged to receive inputs from the one or more external energy sources 120a-120c. The controller 310 is configured to control discharging of the battery 130 by controlling the DC power drawn from the battery 130 by the one or more DC/DC converters 140a-140d. In embodiments, the controller 310 comprises an energy management system, EMS.

In embodiments, the controller 310 is configured to manage the charging station 100 autonomously. In alternative embodiments, the controller 310 is configured to manage the charging station 100 based on instructions received from a further entity (not shown), e.g. via a network. For example, instructions may be provided by a grid operator, a customer management system, etc.

In embodiments, the controller 310 is configured to control charging and discharging of the battery 130 using a power balancing algorithm. In embodiments, the power balancing algorithm is dependent on a desired charging power of one or more electric vehicles to be charged and/or a charge condition of the battery 130. The use of such a power balancing algorithm increases the efficiency of the charging station 100, thereby reducing cost and/or extending the lifetime of the charging station 100. In embodiments, the controller 310 is configured to schedule the transfer of power between the power converters 202a, 202b, 204a, 204b, 206a, 206b arranged to output DC power to the DC bus 110, and the DC/DC converters 140a-140d arranged to receive DC power from the DC bus 110.

In embodiments, the controller 310 is configured to control charging and discharging of the battery 130 based on a determined health condition of the battery 130. This allows the health and/or longevity of the battery to be improved. The health condition of the battery 130 may be determined based on factors such as a number of charge/discharge cycles that the battery 130 has undergone, a charge or discharge time of the battery 130, an age of the battery, a voltage of the battery, etc. In embodiments, the health condition of the battery 130 comprises a forecast health condition of the battery 130, e.g. a predicted future health condition of the battery 130. In embodiments, the controller 310 is configured to determine a charge/discharge cycle for the battery 130 that optimizes the usage and/or health of the battery 130. The controller 310 is configured to control charging and discharging of the battery 130 based on the determined charge/discharge cycle.

In embodiments, the charging station 100 comprises an electric vehicle identification system (not shown). The electric vehicle identification system may be at least partly comprised in and/or implemented by the controller 310. The electric vehicle identification system is configured to identify an electric vehicle to be charged by the charging station 100, and determine, based on the identified electric vehicle, a desired charging power for charging the identified electric vehicle. In such embodiments, the controller 310 is configured to control the drawing of DC power from the battery 130 by the one or more DC/DC converters 140a-140d based on the determining. In embodiments, the electric vehicle identification system comprises a visual object detection system, e.g. comprising a camera and an image processing function configured to identify objects in images. Using an electric vehicle identification system provides an improved user experience, since the charging station 100 is able to automatically determine a charging power for the electric vehicle without user input being required. Moreover, charging of the electric vehicle may be performed more reliably and/or efficiently by tailoring the charging power to the particular electric vehicle that is to be charged. In embodiments, a user identification system is used instead of or in addition to the electric vehicle identification system. For example, instead of visually detecting a particular electric vehicle, facial recognition may be used to identify a particular user, and an electric vehicle associated with that user may be determined, e.g. by accessing a database of registered users and vehicles. In such embodiments, the controller 310 is configured to control the drawing of DC power from the battery 130 by the one or more DC/DC converters 140a-140d based on the electric vehicle associated with the identified user. In alternative embodiments, the charging station 100 does not comprise an electric vehicle identification system or a user identification system.

In embodiments, the charging station 100 comprises one or more of a local area network, LAN, interface, an Ethernet connection and a wireless interface, to enable remote monitoring of the charging station 100, e.g. via a network such as the Internet. Such interfaces/connections can also enable software updates and/or servicing to be provided remotely. In embodiments, the charging station 100 is configured to communicate with one or more remote entities using, for example, a TCP/IP based communication protocol, a serial communication protocol for processing data and measurements, or an open charge point communication protocol, OCPP, for third party monitoring and operation and/or transaction handling. In embodiments, the charging station 100 is configured to use an ISO 15118 communication stack.

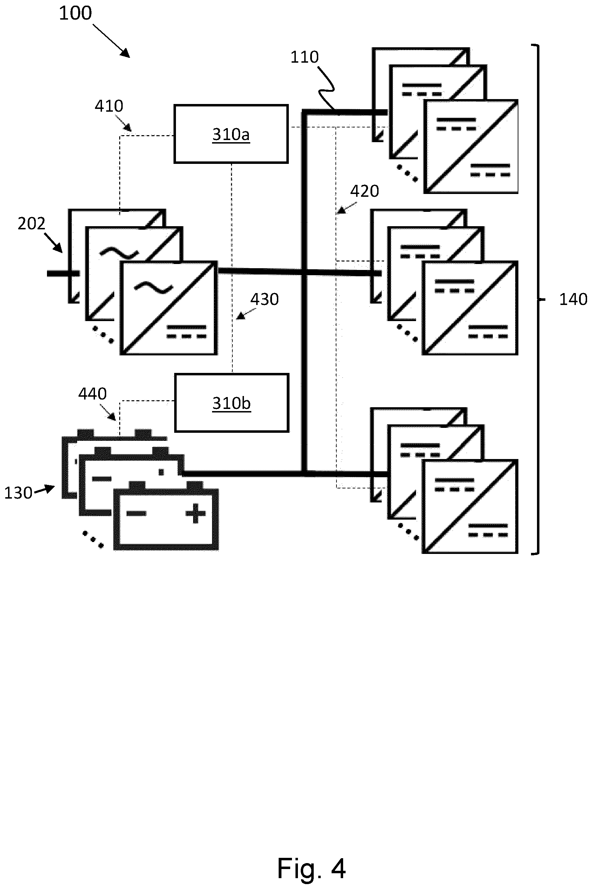

Figure 4 shows schematically a network diagram of the charging station 100, according to embodiments of the present disclosure.

In the embodiments of Figure 4, the controller 310 comprises two controller modules: an energy controller 310a and a battery energy storage system, BESS, controller 310b. The energy controller 310a and the BESS controller 310b are communicatively coupled via a communication channel 430. The communication channel 430 may comprise a transmission control protocol, TCP, communication channel, e.g. implemented using MQTT or websocket. In embodiments, each of the controller modules 310a, 310b comprise separate physical and/or logical components. However, it will be understood that the functions of both controller modules 3 10a, 310b may be performed by a single physical and/or logical component in some embodiments.

In embodiments, the energy controller 310a is communicatively coupled to the AC/DC converters 202a, 202b via a first controller area network, CAN, communication bus 410. In embodiments, the energy controller 310a is communicatively coupled to the DC/DC converters 140a-140d via a second CAN communication bus 420. In embodiments, the BESS controller 310b is communicatively coupled to the battery 130 via a third CAN communication bus 440. The configuration of the charging station 100 shown in Figure 4 provides an efficient and flexible installation of the charging station 100, allowing different battery energy storage capabilities to be used to adapt to different charging requirements.

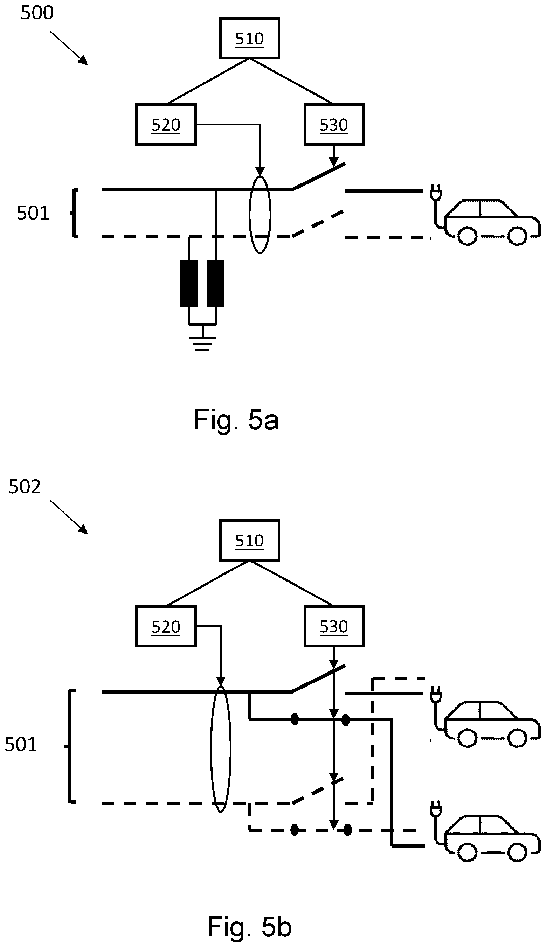

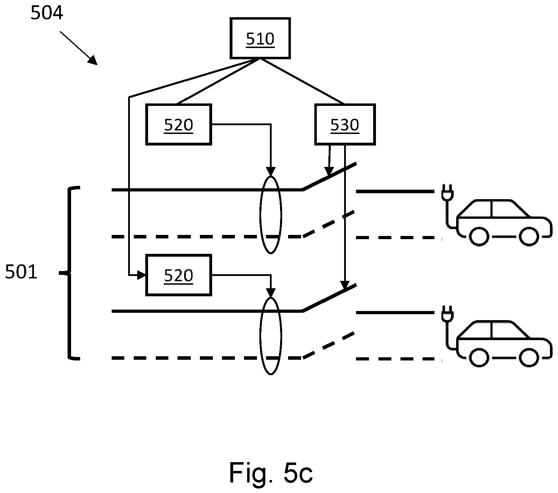

Figures 5a-5c show schematic diagrams of front-end electric vehicle chargers 500, 502, 504, respectively. A front-end electric vehicle charger is a front end (e.g. a user-facing end) of an electric vehicle charger part of a charging station. In particular, Figure 5a shows a front-end electric vehicle charger 500 with a single point of charge, Figure 5b shows a front-end electric vehicle charger 502 with a double (non-parallel) point of charge, and Figure 5c shows a front-end electric vehicle charger 504 with a double (parallel) point of charge. Each of the front-end electric vehicle chargers 500, 502, 504 may be used with the charging station 100 described above. For example, each of the front-end electric vehicle chargers 500, 502, 504 may be coupled to, and receive power from, the DC/DC converters 140a-140d that are arranged to draw power from the battery 130 via the DC bus 110. In embodiments, each of the front-end electric vehicle chargers 500, 502, 504 may comprise, or be comprised in, the charging connections 150a, 150b described above.

Each of the front-end electric vehicle chargers 500, 502, 504 comprises one or more power lines 501 connectable to a DC/DC converter (not shown) and arranged to receive DC power from the DC/DC converter. In embodiments, each of the front-end electric vehicle chargers 500, 502, 504 comprises a human machine interface 510. The human machine interface 510 is arranged to provide for a user a visualization of the charging process, e.g. displaying information and/or operating instructions on a display device. The human machine interface 510 may be communicatively coupled to the controller 310, in some embodiments. In embodiments, the front-end electric vehicle chargers 500, 502, 504 comprise one or more insulation monitoring devices 520. The insulation monitoring devices 520 are arranged to perform ground insulation safety checks in accordance with safety standards on pairs of power lines 501. In embodiments, each of the front-end electric vehicle chargers 500, 502, 504 comprises a charge control unit 530. The charge control unit 530 is arranged to selectively establish an electrical connection with an electric vehicle, thereby to cause commencement of charging of the electric vehicle. The electrical connection may be a wired connection or a wireless connection. The charge control unit 530 may be communicatively coupled to the controller 310, in some embodiments. In embodiments, each of the front-end electric vehicle chargers 500, 502, 504 comprises a video camera (not shown) for performing object detection, e.g. to identify a user and/or an electric vehicle. This allows the power transfer and/or energy balance to be optimized prior to charging the electric vehicle.

The front-end electric vehicle charger 504 shown in Figure 5c has a double point of charge with parallel availability. Such parallel availability has the advantage of having independent power lines for charging multiple electric vehicles at the same time. However, this configuration may be more complex and/or expensive than the front-end electric vehicle charger 502 shown in Figure 5b, which has a double point of charge but does not have parallel availability. For example, the front-end electric vehicle charger 504 shown in Figure 5c may require more wiring and/or connections than the front-end electric vehicle charger 502 shown in Figure 5b. The front-end electric vehicle charger 502 shown in Figure 5b may require the monitoring of only a single pair of power lines (e.g. by a single insulation monitoring device 520), whereas the front-end electric vehicle charger 504 shown in Figure 5c may require the monitoring of multiple pairs of power lines (e.g. by multiple insulation monitoring devices 520).

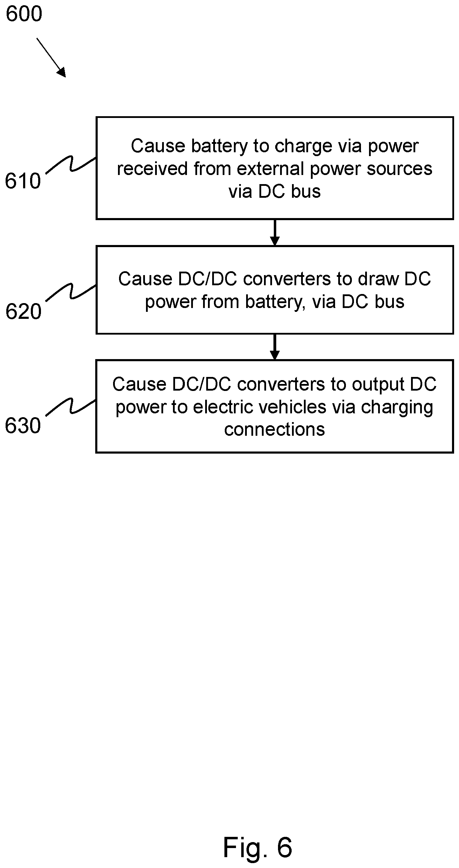

Referring to Figure 6, there is shown a method 600 of controlling a charging station for charging electric vehicles, according to embodiments of the present disclosure. The charging station comprises a DC bus arranged to receive power from one or more external energy sources. The charging station also comprises a battery coupled to the DC bus. The charging station also comprises one or more DC/DC converters coupled to the DC bus. The method 600 may be used to control the charging station 100 described above. In embodiments, the method 600 is performed by a controller such as the controller 310 described above. As such, the method 600 may comprise operations performed by hardware and/or software. In some cases, at least part of the method 600 comprises one or more computer processes performed in processing systems or processors. Examples described herein also extend to computer programs, for example computer programs on or in a carrier, adapted for putting the method into practice. The carrier may be any entity or device capable of carrying the program.

A first step of the method 600, represented by item 610, comprises causing the battery to charge via power received from the one or more external energy sources via the DC bus.

A second step of the method 600, represented by item 620, comprises causing the one or more DC/DC converters to draw DC power from the battery, via the DC bus.

A third step of the method 600, represented by item 630, comprises causing the one or more DC/DC converters to output DC power to one or more electric vehicles via one or more charging connections, to charge the one or more electric vehicles. It will be understood that one or more of the steps 610, 620, 630 may be performed simultaneously or in a different order than that described above. For example, the one or more DC/DC converters may be caused to both draw DC power from the battery and output DC power to an electric vehicle substantially simultaneously.

Whilst the present disclosure has been described and illustrated with reference to particular embodiments, it will be appreciated by those of ordinary skill in the art that the present disclosure lends itself to many different variations not specifically illustrated herein. By way of example only, certain possible variations will now be described.

In embodiments, the charging station 100 is used for charging electric vehicles. In alternative embodiments, the charging station 100 is suitable for and/or may be used for charging electrically-chargeable items and/or objects other than vehicles.

Where in the foregoing description, integers or elements are mentioned which have known, obvious or foreseeable equivalents, then such equivalents are herein incorporated as if individually set forth. It will also be appreciated that integers or features of the present disclosure that are described as preferable, advantageous, convenient or the like are optional and do not limit the scope of the independent claims. Moreover, it is to be understood that such optional integers or features, whilst of possible benefit in some embodiments, may not be desirable, and may therefore be absent, in other embodiments.

The features of any dependent claim may be combined with the features of any of the independent claims or other dependent claims. Features described in relation to one example or embodiment may be used in other described examples or embodiments, e.g. by applying relevant portions of that disclosure.

## Claims

1. A charging station for charging electric vehicles, the charging station comprising:
a direct current, DC, bus arranged to receive power from one or more external energy sources;
a battery coupled to the DC bus, the battery being arranged to charge via power received from the one or more external energy sources via the DC bus; and
one or more DC/DC converters coupled to the DC bus, the one or more DC/DC converters being arranged to:
draw DC power from the battery, via the DC bus; and
output DC power to one or more electric vehicles via one or more charging connections, to charge the one or more electric vehicles.

2. A charging station according to claim 1, wherein the battery is a modular battery comprising a plurality of removable strings connected to each other in parallel, each string comprising one or more cells.

3. A charging station according to claim 2, further comprising a plurality of battery management systems, each battery management system being configured to manage a respective string of the plurality of strings of the battery.

4. A charging station according to any preceding claim,
wherein the one or more DC/DC converters comprise a plurality of removable DC/DC converters connected, in parallel, to the DC bus, and
wherein the plurality of DC/DC converters are operable to output DC power to a common charging connection for charging an electric vehicle.

5. A charging station according to claim 4, wherein the charging station comprises a switch arranged to selectively connect one or more of the plurality of DC/DC converters to the common charging connection.

6. A charging station according to any preceding claim, wherein the DC bus comprises connectors for connecting one or more additional DC/DC converters to the DC bus, in parallel with the one or more DC/DC converters.

7. A charging station according to any preceding claim,
wherein the one or more external energy sources comprise an electrical grid, and
wherein the charging station further comprises one or more AC/DC converters coupled to the DC bus, the one or more AC/DC converters being arranged to:
receive an alternating current, AC, input from the electrical grid; and
output DC power to the DC bus.

8. A charging station according to claim 7, wherein the charging station is arranged to output power from the battery to the electrical grid, via the DC bus.

9. A charging station according to any preceding claim,
wherein the one or more external energy sources comprise a renewable energy source, and
wherein the charging station further comprises one or more power converters coupled to the DC bus, the one or more power converters being arranged to:
receive power from the renewable energy source; and
output DC power to the DC bus.

10. A charging station according to any preceding claim, the charging station further comprising a controller configured to control charging and discharging of the battery by:
controlling the power received at the battery from the one or more external energy sources via the DC bus; and
controlling the DC power drawn from the battery by the one or more DC/DC converters.

11. A charging station according to claim 10, wherein the controller is configured to control charging and discharging of the battery using a power balancing algorithm, wherein the power balancing algorithm is dependent on a desired charging power of the one or more electric vehicles and/or a charge condition of the battery.

12. A charging station according to claim 10 or claim 11, wherein the controller is configured to control charging and discharging of the battery based on a determined health condition of the battery.

13. A charging station according to any of claims 10 to 12, the charging station further comprising an electric vehicle identification system configured to:
identify an electric vehicle to be charged by the charging station; and
determine, based on the identified electric vehicle, a desired charging power for charging the identified electric vehicle,
wherein the controller is configured to control the drawing of DC power from the battery by the one or more DC/DC converters based on the determining.

14. A method of controlling a charging station for charging electric vehicles, the charging station comprising:
a direct current, DC, bus arranged to receive power from one or more external energy sources;
a battery coupled to the DC bus; and
one or more DC/DC converters coupled to the DC bus,
the method comprising:
causing the battery to charge via power received from the one or more external energy sources via the DC bus; and
causing the one or more DC/DC converters to:
draw DC power from the battery, via the DC bus; and
output DC power to one or more electric vehicles via one or more charging connections, to charge the one or more electric vehicles.

15. Circuitry for an electric vehicle charging station, the circuitry comprising:
a direct current, DC, bus arranged to receive power from one or more external energy sources; and
one or more DC/DC converters coupled to the DC bus, the one or more DC/DC converters being arranged to:
draw DC power from a battery, via the DC bus, the battery being arranged to charge via power received from the one or more external energy sources via the DC bus; and
output DC power to one or more electric vehicles via one or more charging connections, to charge the one or more electric vehicles.
